# EUROPEAN PATENT APPLICATION

(11) **EP 2 339 441 A2**
(43) Date of publication of application: **29.06.2011**
(21) Application number: 10196425.2
(22) Date of filing: 22.12.2010
(51) Int. Cl.: G06F 3/048, G06F 3/033

(54) **Touch-surface with mouse-over functionality**

(30) Priority: 23.12.2009 GB 0922590
(71) Applicant: Promethean Limited, Blackburn Lancashire BB1 5TH (GB)
(72) Inventor: Oakley, Andrew, Blackburn, Lancashire BB1 5TH (GB)
(74) Representative: Williams, David John

(57) **Abstract**

There is disclosed an input system for controlling a display, comprising: an input device including: an interactive surface, for detecting a contact point thereon, the interactive surface being associated with the display such that a location on the interactive surface corresponds to a location on the display; excitation means for generating an excitation signal; and sensing means for sensing a response to the excitation signal; and a pointing device including means for responding to the excitation signal; and wherein an input condition of the input device is determined in dependence on whether the interactive surface detects a contact point and whether the sensing means receives a response from the pointing device.

## Description

### BACKGROUND TO THE INVENTION:

### Field of the Invention:

The present invention relates to an input device having an interactive surface for detecting a contact point thereon, and which is used for controlling a display. The invention is particularly, but not exclusively, concerned with such an arrangement in which the interactive surface is a touch-sensitive surface.

### Description of the Related Art:

There is known in the art a variety of different input technologies which can be used in conjunction with small displays, such as liquid crystal displays (LCDs), to allow a user to interact through a touch contact or stylus with a computer application or operating system running on a device associated with the display. Examples of such devices with interactive displays include personal digital assistants (PDAs), tablet personal computers (PCs), smart phones etc.

Portable devices having interactive surfaces for receiving touch inputs or stylus inputs for controlling a display are also known in other scenarios. An example scenario concerns remote telepointing, where a portable device (known as a slate device) is in communication with an interactive display system including an interactive whiteboard. In such arrangements the portable device having an interactive surface does not have a display coincident with the surface. The interactive surface is used as a remote telepointing device, with inputs detected at the surface being used to control a separate display, such as the display of the interactive whiteboard. However it is also possible that such portable devices are additionally provided with a display coincident with the interactive surface.

An electronic whiteboard system, being a typical example of an interactive display system, is typically adapted to sense the position of a pointing device or pointer relative to a work surface (an interactive display surface) of the whiteboard. When an image is displayed on the work surface of the whiteboard, and its position calibrated, the pointer can be used in the same way as a computer mouse to manipulate objects on the display by moving a pointer over the surface of the whiteboard. As is known in the art, such an interactive display system may be enhanced by providing one or more remote devices, which include their own interactive surfaces for receiving inputs from a user of such device, to additionally control the manipulation of objects on the display in the same way as a mouse.

A typical application of such an interactive display system is in a teaching environment. The use of interactive whiteboard systems improves teaching productivity and also improves student comprehension. Such whiteboards also allow use to be made of good quality additional teaching materials, and allow data to be manipulated and presented using interactive technologies. In an educational environment, typically a teacher may use a pointing device at the interactive display surface of the whiteboard, and one or more portable devices having interactive surfaces may be distributed amongst one or more students within the classroom. The teachers can then input and control the displayed images using the pointing device at the interactive surface, and under control of the teacher students can additionally provide input to control the interactive display using their respective portable devices including interactive surfaces.

In many situations where a device is provided with an interactive surface to enable control of a display, whether an integrated display device such as a PDA or a remote display device such as an interactive whiteboard, it is advantageous to provide a functionality referred in the art as "mouse-over" or "hover". In devices where the interactive surface is used for remote telepointing, to control a display which is not coincident with the interactive surface, this allows the user of the device to see where the cursor is located relative to the interactive surface before committing to a so-called "pen-down" condition to select or annotate the display. In other scenarios, the interface menu may have been designed with mouse-over or hover in mind, and be adapted to provide additional information about a menu option whilst a pointing device "hovers" over the icon.

Only a certain subset of input technologies are capable of providing this type of "mouse-over" or "hover" functionality. The most common type of input technology for providing this functionality is electromagnetic induction. Devices incorporating electromagnetic induction input technology are known in the art as digitisers, and such technology is typically used in slate devices for communication with an interactive whiteboard system.

In such slate devices, a user is typically provided with a pen digitiser to control the position of the system cursor on the interactive whiteboard, by moving the pen digitiser across the interactive surface of the remote device. Using electromagnetic induction technology, the interactive surface is provided with a grid, as known in the art, which by electromagnetic induction can be coupled to a tuned circuit contained within the pen digitiser, in order to determine the location of the pen digitiser at the interactive surface. The electromagnetic induction technique is such that the pen digitiser can be detected by the interactive surface when it is in contact with the interactive surface or when it is proximate to the interactive surface. Thus a "hover" or "mouse-over" mode of operation can be detected separate to a "pen-down" mode of operation. The "mouse-over" mode of operation, where the pen is proximate but not touching the interactive surface, can be used by the user to determine the location of the cursor before entering "pen-down" operation and manipulating the displayed images, such as annotating.

Interactive surface technologies which do not allow for detecting a "mouse-over" or "hover" condition are generally not used for this type of application, specifically remote telepointing, as they are not as useful when there is not a coincident display due to the difficulty in determining where the cursor is located. Thus, various interactive surface technologies, such as touch-sensitive technologies using resistive membranes, are typically not suitable for remote telepointing applications.

Furthermore, even in applications where the display is coincident with the interactive surface, the functionality provided by the interactive display surface may be limited, since it may not be possible to provide for the additional functionality provided by "mouse-over" or "hover", such as providing additional information about menu options whilst hovering.

Whilst interactive surfaces using other technologies, such as electromagnetic induction, offer a solution to this problem in coincident displays, such devices are typically required to be provided for at a minimum cost, and the associated cost of electromagnetic induction technology is likely to exclude the use of such technology. Touch-sensitive technology such as resistive membrane technology is notably cheaper. Further, it may be a requirement in various implementations to allow for a user to be able to use a finger to interact with the interactive surface, either instead of or in addition to a stylus. Conventional electromagnetic induction technologies do not allow for the detection of a finger, but only a stylus including a tuned circuit. Thus product designers are inclined towards using touch-sensitive technologies such as resistive membrane technology not only to minimise cost, but also to allow for the use of finger inputs, particularly for interactive surfaces having coincident displays.

It is an aim of the invention to provide an improved device including an interactive surface, which allows for the detection of a finger input and includes associated input detection technology, and which also allows for detection of a "mouse-over" or "hover" condition.

### SUMMARY OF THE INVENTION:

In one aspect the invention provides an input system for controlling a display, comprising: an input device including: an interactive surface, for detecting a contact point thereon, the interactive surface being associated with the display such that a location on the interactive surface corresponds to a location on the display; excitation means for generating an excitation signal; and sensing means for sensing a response to the excitation signal; and a pointing device including means for responding to the excitation signal; and wherein an input condition of the input device is determined in dependence on whether the interactive surface detects a contact point and whether the sensing means receives a response from the pointing device.

In general, one of four states of the input condition may be determined in dependence on one of: the interactive surface detecting a contact point and the sensing means receiving a response from the pointing device; the interactive surface detecting a contact point and the sensing means not receiving a response from the pointing device; the interactive surface not detecting a contact point and the sensing means receiving a response from the pointing device; and the interactive surface not detecting a contact point and the sensing means not receiving a response from the pointing device.

One state may be determined in dependence on the interactive surface detecting a contact point and the sensing means receiving a response from the pointing device. The one state of the input condition may denote detection of the pointing device at and on the interactive surface. The state of the input condition may denote a pen-up state or a hover state.

The one state of the input condition may be determined in dependence on the interactive surface detecting a contact point and the sensing means not receiving a response from the pointing device. The one state of the input condition may denote the presence of an inactive pointing device or a finger. The one state of the input condition may denote a pen-down state or an annotate state.

The pointing device may be adapted to switch between a first state and a second state, wherein a first input condition is determined responsive to the pointing device being in the first state, and a second input condition is determined responsive to the pointing device being in the second state. The pointing device may include a pressure sensitive switch, wherein the pointing device is switched between the first state and the second state by applying pressure to the pointing device at the interactive surface. With a first pressure value the pointing device may be in the first state and with a second pressure value the pointing device may be in the second state. The pointing device may be adapted to switch from the first state to the second state responsive to an increase in the applied pressure.

The pointing device may be adapted to switch from the first state to the second state responsive to the applied pressure exceeding a threshold. The pointing device may be adapted to switch from the second state to the first state responsive to a decrease in the applied pressure. The pointing device may be adapted to switch from the second state to the first state responsive to the applied pressure being below a threshold.

The first state may be determined in dependence on the interactive surface detecting a contact point and the sensing means receiving a response from the pointing device. This first state may indicate presence of the pointing device at, but not on, the surface. This first state may comprise a pen-up or hover state.

The second state may be determined in dependence on the interactive surface detecting a contact point and the sensing means not receiving a response from the pointing device. This second state may indicate the presence of the pointing device at and on the surface. This second state may comprise a pen-down state or an annotate state.

A state of the input condition may be dependent on a pressure value associated with the pointing device being brought into contact with the surface. The pointing device may be adapted to sense the pressure value. The pointing device may include a pressure sensitive switch, which switch is switched between a first state and a second state in dependence on a pressure value.

The means for responding to the excitation signal in the pointing device may include a resonant circuit, wherein responsive to the excitation signal the resonant circuit is excited, and responsive to excitation of the resonant circuit the sensing means is excited. The state of the switch may determine whether the resonant circuit is on or off. With the switch in the first state the resonant circuit may be on, and the pointing device is enabled to respond to the excitation signal. With the switch in the second state the resonant circuit may be off, and the pointing device is not enabled to respond to the resonant circuit.

The pointing device may include means for conveying information in response to the excitation signal. The information may be indicative of a state of the pointing device. The means may be a switch associated with the pointing device. The information may be an identity of the pointing device. The means may be a radio frequency identification tag.

The interactive surface may include a resistive membrane for detecting a contact point.

The invention further provides an input device for controlling a display, comprising: an interactive surface, for detecting a contact point thereon; an excitation means for generating an excitation signal; a sensing means for sensing a response to the excitation signal; and a mode select means for determining a mode of operation for the input device in dependence on whether a contact point on the interactive surface is detected and whether a response to the excitation signal is sensed.

One of four states of the input condition may be determined in dependence on one of: the interactive surface detecting a contact point and the sensing means receiving a response from the pointing device; the interactive surface detecting a contact point and the sensing means not receiving a response from the pointing device; the interactive surface not detecting a contact point and the sensing means receiving a response from the pointing device; and the interactive surface not detecting a contact point and the sensing means not receiving a response from the pointing device.

One state may be determined in dependence on the interactive surface detecting a contact point and the sensing means receiving a response from the pointing device. The one state of the input condition may denote detection of the pointing device at but not on the interactive surface. The state of the input condition may denote a pen-up state or hover state.

The one state of the input condition may be determined in dependence on the interactive surface detecting a contact point and the sensing means not receiving a response from the pointing device. The one state of the input condition may denote the presence of an inactive pointing device or a finger. The one state of the input condition may denote a pen-down state or annotate state.

A first state may be determined in dependence on the interactive surface detecting a contact point and the sensing means receiving a response from the pointing device. The first state may indicate presence of the pointing device at, but not on, the surface. The first state may comprise a hover state or pen-up state.

A second state may be determined in dependence on the interactive surface detecting a contact point and the sensing means not receiving a response from the pointing device. The second state may indicate the presence of the pointing device at and on the surface. The second state may comprise a pen-down state or annotate state.

The interactive surface may include a resistive membrane for detecting a contact point.

The invention still further provides a pointing device for use with an input device for controlling a display, comprising: an excitation means for generating a signal responsive to an excitation signal; a control means for enabling or disabling the excitation means in a first state or a second state of the pointing device.

The pointing device may include a pressure sensitive switch, wherein the pointing device is switched between the first state and the second state by applying pressure to the pointing device at the interactive surface.

With a first pressure value the pointing device may be in the first state and with a second pressure value the pointing device is in the second state.

The pointing device may be adapted to switch from the first state to the second state responsive to an increase in the applied threshold.

The pointing device may be adapted to switch from the first state to the second state responsive to the applied pressure exceeding a threshold.

The pointing device may be adapted to switch from the second state to the first state responsive to a decrease in the applied pressure.

The pointing device may be adapted to switch from the second state to the first state responsive to the applied pressure being below a threshold.

A state of an input condition may be dependent on a pressure value associated with the pointing device being brought into contact with the surface.

The pointing device may be adapted to sense the pressure value.

The means for responding to the excitation signal in the pointing device may include a resonant circuit, wherein responsive to the excitation signal the resonant circuit is excited, and responsive to excitation of the resonant circuit the sensing means is excited.

The state of the switch may determine whether the resonant circuit is on or off. With the switch in the first state the resonant circuit may be on, and the pointing device is enabled to respond to the excitation signal. With the switch in the second state the resonant circuit may be off, and the pointing device is not enabled to respond to the resonant circuit.

The pointing device may include means for conveying information in response to the excitation signal. The information may be indicative of a state of the pointing device. The means may be a switch associated with the pointing device. The information is an identity of the pointing device.

The means may be a radio frequency identification tag.

In further aspects the invention provides methods for controlling an input system, an input device, or a pointing device, and/or methods for operating an input system, an input device, or a pointing device.

### BRIEF DESCRIPTION OF THE FIGURES:

The invention will now be described by way of example with reference to the accompanying figures, in which:
Figure 1 illustrates the main elements of a typical known example of an interactive display system including a plurality of remote input devices including interactive display surfaces;
Figure 2 illustrates an input device adapted in accordance with an embodiment of the invention;
Figure 3 illustrates a pointing device for use with a device having an interactive surface according to Figure 2 in an embodiment of the invention;
Figure 4 illustrates a control circuit for a pointing device such as Figure 3 in accordance with an embodiment of the invention;
Figure 5 illustrates control circuitry associated with an input device such as that of Figure 2 in order to implement an embodiment of the invention; and
Figure 6 illustrates the operation of the circuit of Figure 3 in an embodiment of the invention.

### DESCRIPTION OF THE PREFERRED EMBODIMENTS:

The invention is now described by way of reference to various examples, embodiments, and advantageous applications. One skilled in the art will appreciate that the invention is not limited to the details of any described example, embodiment or implementation. In particular the invention is described with reference to an exemplary implementation in association with an interactive display system comprising an electronic whiteboard, associated with a plurality of input devices having respective interactive surfaces. One skilled in the art will appreciate that the principles of the invention are not limited to such a described implementation, or to such a specific device.

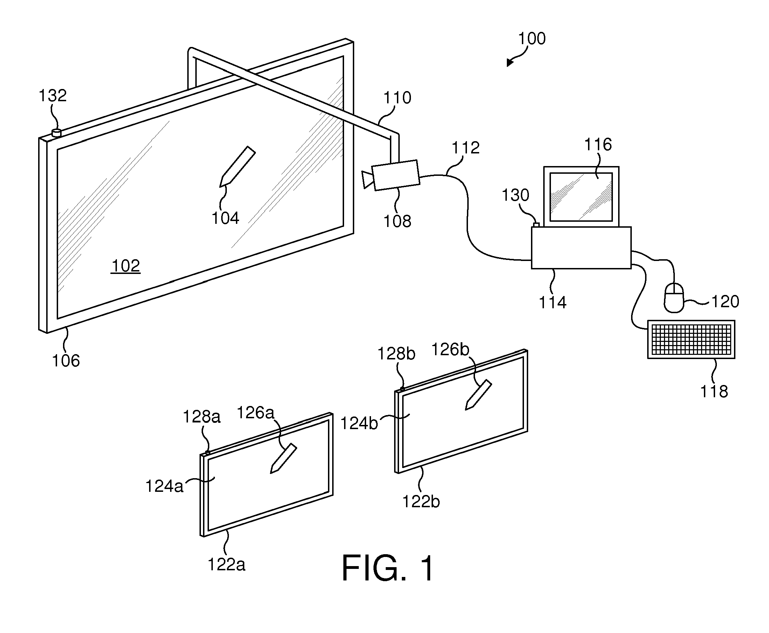

With reference to Figure 1, an exemplary interactive display system 100 comprises: a whiteboard assembly arrangement generally designated by reference numeral 106, and including an interactive display surface 102; a projector 108; and a computer system 114. The projector 108 is attached to a fixed arm or boom 110, which extends in a direction perpendicular from the surface of the whiteboard 106. One end of the boom 110 supports the projector 108 in a position in front of the interactive display surface 102, and the other end of the boom 110 is fixed to the whiteboard 106 or near the whiteboard, such as a frame associated with the whiteboard 106, or a wall on which the whiteboard 106 is mounted. The whiteboard assembly includes a wireless transceiver 132 for communication with other devices.

The computer 114 controls the interactive display system. A computer display 116 is associated with the computer 114. The computer 114 is additionally provided with a keyboard input device 118 and a mouse input device 120. The computer 114 includes a wireless transceiver 130 for communication with other devices. The computer 114 is connected to the whiteboard 106 wirelessly to receive data from the display surface 102. The computer is connected to the projector 108 by a communication link 112 in order to provide display images to the projector 108.

Shown in Figure 1 is a pointing device 104, which is used to provide inputs at the display surface 102. In other interactive display systems the interactive display surface 102 may be a touch-sensitive surface, and inputs provided at the interactive display surface by touch using a finger. Various technologies exist for detecting the position of a pointing device (such as a pen or finger) at the interactive surface 102, which additionally include for example camera position detection technology.

As is known in the art, the computer 114 controls the interactive display system to project images via the projector 108 onto the interactive display surface 102. The position of the pointing device 104 is detected by the interactive display surface 102, and data returned to the computer 114, and location information determined by the computer 114. The pointing device 104 operates in the same way as a mouse to control the displayed images.

In addition, in the described embodiment the interactive display system of Figure 1 is additionally adapted to incorporate communication with one or more exemplary remote devices for providing additional control to the displayed images on the interactive display surface 102. As shown in Figure 1, there are provided for example two remote devices 122a and 122b. Each remote device 122a and 122b is provided with a respective interactive surface 124a and 124b. Associated with each remote device 122a and 122b is a respective pointing device 126a and 126b. Each remote device 122a and 122b is also shown to have a respective wireless transceiver 128a and 128b, for communicating wirelessly with the interactive display system 100.

As known in the art, the remote devices 122a and 122b provide remote telepointing, to allow a user associated with each respective remote device to control the display of images on the interactive display surface 102, including the selection of objects to control a software application or the operating system. In a teaching environment, a teacher generally interacts with the displayed images using the pointing device 104 at the interactive display surface 102, and enables one or more of the remote devices 122a or 122b to provide additional control from one or more students. In such an environment the interactive surfaces 124a and 124b may not be associated with any coincident display, the movement of the pointing devices 126a or 126b resulting in corresponding movement of a cursor displayed on the images displayed on the interactive display surface 102.

The invention is now described by way of the context of its application to a remote device such as device 122a or 122b communicating in the exemplary interactive display system 100 of Figure 1. The invention is not limited to its implementation in a device such as the remote devices 122a and 122b for communicating with an interactive display system, nor is the invention limited to use in the context of an interactive display system. Further possible applications of the invention and its embodiments are discussed hereinbelow following a discussion of an exemplary implementation of the invention in the interactive display system scenario illustrated in Figure 1.

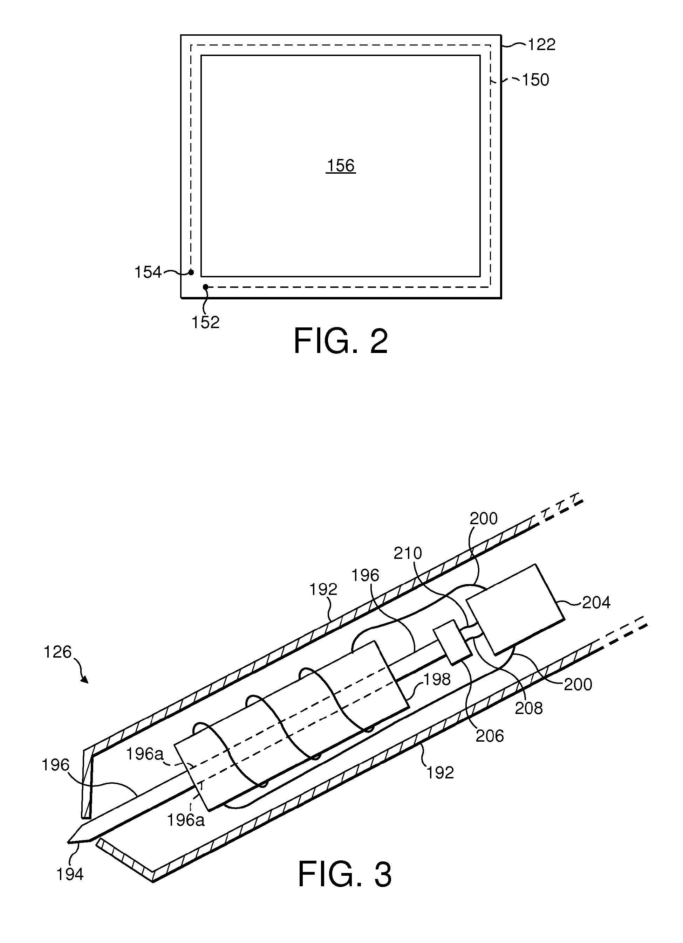

With reference to Figure 2, there is illustrated a device 122 corresponding to the devices 122a and 122b of Figure 1. The device 122 includes an interactive surface 156. As noted above, in the preferred embodiment described herein the interactive surface 156 does not incorporate a display element. Dash line 150 denotes a loop of conducting material formed around the edge of the interactive surface 156, and embedded within the device 122. Although the loop is illustrated in Figure 2 as being positioned wholly outside the area of the interactive surface 156, as will be understood by one skilled in the art taken in conjunction with the following description, the position of the loop 150 may alternatively be coincident with the interactive 156. As illustrated in Figure 2, the loop is in fact not a continuous loop, but is broken at two contact points 152 and 154. The loop 150 is formed of a conductive wire, and forms a single turn of an inductive coil as will be described further hereinbelow. Although in Figure 2 the loop is illustrated as having a single turn for simplification of illustration, preferably the loop has a plurality of turns. Further, the loop may take other shapes. A multi-turn loop in a spiral shape may provide an improved way of encompassing energy on a large panel. Such a spiral loop may be formed coincident with the area of the interactive surface.

As will be described further hereinbelow, the loop 150 is provided to form an excitation coil and/or sensing coil. In use, the coil is excited at a particular frequency during an excitation phase. If a pointing device is present within the vicinity of the coil having a resonant or tuned circuit of the appropriate frequency, it is excited. The excitation of the resonant or tuned circuit in turn excites the loop 150 during a sensing phase, such that the mere presence of the pointing device can be detected.

The interactive surface 156 preferably comprises a resistive touch membrane. The invention however is not limited to such a type of interactive surface, and other interactive surface technologies may be used to implement an interactive surface in accordance with the principles of this invention, such as projected capacitance technology or camera technology for example.

The loop 150 provides a first means for detecting the presence of a pointing device proximate or at the interactive surface 156. The interactive surface itself provides a second means for the detection of the presence of a pointing device. As is apparent from the following discussion, whilst there are two means provided to detect the presence of the pointing device, only the resistive touch membrane can detect the location of the pointing device on the surface. The electromagnetic detection means (implemented as loop 150) is a simple - and low cost - means for detecting the presence of the pointing device, but cannot determine its location on the surface. The resistive touch membrane provides for determination of the location on the surface, and thus the need for a more complex - and expensive - grid array to determine a coordinate location on the surface is not required.

With reference to Figure 3, there is illustrated a pointing device 126 corresponding to one of the pointing devices 126a and 126b of Figure 1. The pointing device can be used by a user of the device 122 at the interactive surface 156. In accordance with the preferred embodiment of the invention, the pointing device 126 may be used at the interactive surface 156 to provide inputs, which inputs are detected by the interactive surface in dependence upon the detection of contact points at the surface. In addition, the pointing device 126 is adapted to cooperate with the adapted device 122, in order to determine an input condition for the input device, which input condition denotes, in an embodiment, either a "mouse-over" or "hover" condition, or a "pen-down" condition.

The pointing device 126 is adapted to include a pressure-sensitive switch. The pressure-sensitive switch is adapted to switch between a first state and a second state in accordance with a pressure applied at the point of the pointing device when the pointing device is brought into contact with the interactive surface 156.

With reference to Figure 3, the pointing device 126 generally includes a housing 192, a cross section through which is illustrated in Figure 3. A rod of material 196 generally disposed in the housing effectively forms a stylus within the housing, having a point 194 at its end, which point 194 in use is brought into contact with the interactive surface 156 of the device 122. A core of ferrite material is denoted by reference numeral 198, being of a generally cylindrical structure, with the stylus 196 being adapted to press through the centre thereof as denoted by dash lines 196a. A conductive material or wire 200 is arranged to wrap around the ferrite material 198 in a number of turns in order to form an inductive coil. The ends of the wire 200 form inputs to a control circuitry block 204. The implementation of the ferrite material with inductive coil, and the stylus 196, is known in the art.

The end of the stylus 196 opposite the point 194 is arranged, in accordance with embodiments of the invention, to abut a pressure-sensitive switch 206. The pressure-sensitive switch is electrically connected by wires 208 and 210 to the control circuitry block 204.

The pressure-sensitive switch is adapted to switch between a first and second state according to the pressure applied thereto, which pressure is the result of the point 194 of the stylus 196 being brought into contact with the interactive surface 156. In an example implementation, the switch 206 is adapted to operate at a typical force of between 150g and 200g. This means that when the user applies a light force of between 10g and 150g, the switch is maintained in a first state, and when the user applies a heavier force of greater than 200g the switch is switched to a second state.

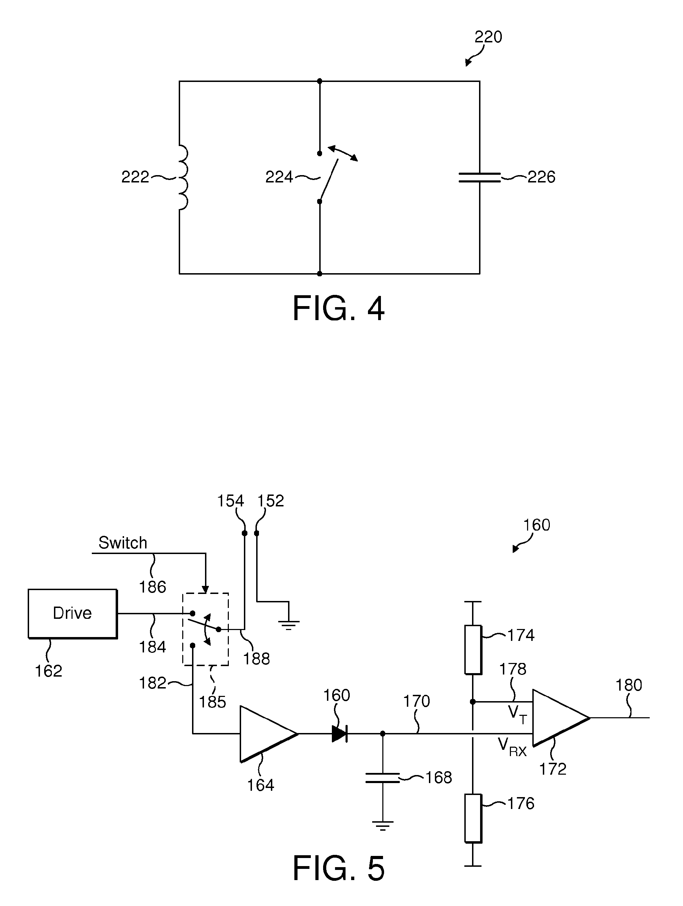

With reference to Figure 4, there is illustrated the operation of the electronics within the pointing device 126 of Figure 3, including the pressure-sensitive switch 206 and the control circuitry block 204. In Figure 4 there is shown a parallel L-C (inductor-capacitor) tuned circuit 220. The tuned circuit 220 comprises an inductor 222 and a capacitor 226 connected in parallel. The inductor 222 of the tuned circuit 220 of Figure 4 represents the inductor coils formed by the wire 200 in Figure 3, and the capacitor 226 represents a capacitor contained within the control circuitry block 204 of the pointing device 126. The tuned circuit 220 of Figure 4 is additionally shown with a circuit switch 224, which corresponds to the pressure-sensitive switch 206 of Figure 3. As can be seen in Figure 4, the switch 224 is switched between an open position and a closed position. In an open position the tuned circuit 220 simply operates as a tuned circuit, and the switch's presence has no effect. When the switch 224 is closed, the tuned circuit is short-circuited and cannot operate.

The interactive surface device 122 of Figure 2 and the pointing device 126 of Figure 3 cooperate with each other in order to detect the presence of the pointing device at the interactive surface 156. The coil 150 of the device 122 is excited by a driver means of the device 122 to generate an excitation signal. The excitation signal causes the tuned circuit 220 of the pointing device 126 to resonate. Following the excitation of the coil 150, excitation is stopped. In the event that the pointing device 126 is present at the interactive surface 156, then following the excitation and the resonance induced in the tuned circuit 220, a further signal is reflected into the coil 150 and detected. Thus in this way the coil 150 provided in the interactive surface device 122 can be used to detect the presence of the pointing device 126.

The single coil 150 (with or without multiple turns) of the interactive surface device 122 is not able to detect position information associated with the pointing device 126. Electromagnetic means to detect the position of the pointing device would require a wire grid to be provided within the interactive surface device 122. In the preferred arrangement the position of the pointing device 126 on the interactive surface 156 is determined by the positioning technology associated with the interactive surface 156, which is preferably a resistive touch membrane surface.

Thus it can be understood that a coordinate location of a contact point on the interactive surface 156 provided by the pointing device 126 is determined by the resistive touch membrane surface sensing and detecting technology, and an appropriate contact point position can be determined. The general presence of the pointing device 126 can then also be detected by the electromagnetic arrangement provided by the single coil 150.

In the event that the user applies light pressure in bringing the pointing device 126 to the interactive surface 156, the pressure-sensitive switch 224 of the tuned circuit 220 remains open, and the tuned circuit resonates and provides a response to the excitation signal from the coil 150. In the event that heavy pressure is applied by the user, and the pressure-sensitive switch 224 changes state and closes, then the tuned circuit 220 is short-circuited and does not respond to an excitation signal. However the presence of a pointing device is still recognised by the resistive touch membrane 156 detecting a contact point.

In this way, the device 122 can recognise an input condition, associated with detection of a contact point, as having either a first state or a second state. The resistive touch membrane interactive surface 156 detects the presence of the pointing device 126 on its surface. In the event when there is a touch detected on the surface 156, and there is also a detected response to an excitation signal transmitted by the coil 150 meaning that the pressure-sensitive switch 224 is open and only light use of pressure is being applied, the input condition is set at a first state. In the event that the interactive surface 156 detects the presence of the pointing device 126 using the resistive touch membrane technology, and in response to an excitation signal from the coil 150 no response is received, then this indicates that the pressure-sensitive switch 224 is closed to short circuit the tuned circuit, and the input condition is set at a second state.

The first state of the input condition can be considered to be equivalent to a "mouse-over" or "hover" state, where light pressure is applied by the user. The second state of the input condition can be considered to be a "pen-down" state.

Thus in an exemplary arrangement the resistive touch membrane surface 156 operates in combination with electromagnetic technology to allow an input condition at the interactive surface 156 to be set in one of two states, and to detect those states. The one of the two states is determined according to pressure applied by the user of the pointing device. In the preferred embodiment the pressure applied is detected using a pressure-sensitive switch in the pointing device.

It should be noted that the implementation of the principles of this technique using a pressure detection at the device 122 itself is not practical. The resistive touch membranes forming the interactive surface 156 typically activate at a pressure of 10g to 50g of force. Thus it would not be practical to establish a reliable implementation which allowed to distinguish between a light pressure and a heavy pressure.

It can also be understood that in the event that a pointing device is brought to the interactive surface 156 which is not a pointing device as configured according to Figure 3, such as a stylus comprising a piece of solid plastic, then the interactive surface 156 will continue to operate as a touch-sensitive surface. The interactive surface 156 will also continue to operate as a touch-sensitive surface in the event that a finger is brought to the interactive surface 156. The interactive surface device 122 simply identifies such inputs as a pointing device with the tuned circuit short-circuited and the second state of the input condition is identified.

Whilst the combination of conditions described above defining the first state and second state for the input condition offer the functionality in accordance with the preferred embodiments of the present invention, one skilled in the art will appreciate that other states for the input condition may be defined, in dependence on the two other combinations of states. A further state may be represented with the interactive surface not detecting a contact point and the sensing means receiving a response from the pointing device. A still further state may be set with the interactive surface not detecting a contact point and the sensing means not receiving a response from the pointing device.

The first state preferably denotes a pen-up, hover or mouse-over state. The first state is preferably interpreted as the pointing device being at, but not on, the interactive surface. The second state preferably denotes a pen-down state. The second state may denote a touch-input state, an annotation state or a finger-input state. The second state is preferably interpreted as the pointing device being at and on the interactive surface.

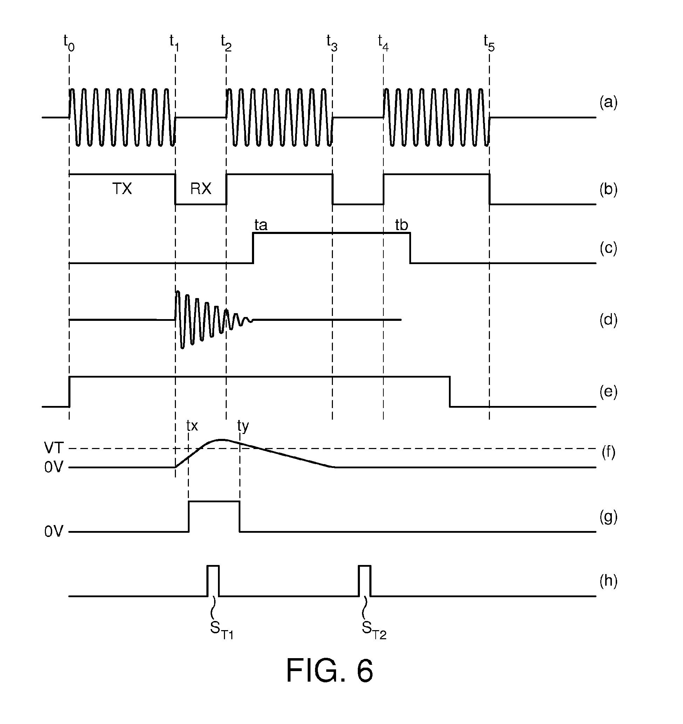

With reference to Figure 5 and Figure 6, there is now described in more detail an example operation of the interactive surface device 122 of Figure 2 in combination with the pen 126 of Figure 3.

In Figure 5, the control circuitry associated with the interactive surface device 122 is shown for an exemplary embodiment. The control circuitry, generally denoted by reference numeral 160, includes a drive circuit 162, a switch 185, an amplifier 164, a diode 160, a capacitor 168, a first resistor 174, a second resistor 176, and a comparator 172.

The switch 185 is controlled by a signal SWITCH on a line 186. The signal SWITCH on line 186 is provided by control circuitry (not illustrated) which controls the coil 150 to be switched between a drive phase and a sense phase. Thus the coil 150 is alternatively driven in cycles between a drive phase and a sense phase. This technique is known in the art. Thus following a drive phase when the coil is driven by an excitation signal, there is followed a sense phase where the coil may detect a response to the excitation signals such as generated by a tuned circuit in a pointing device.

As can be seen in Figure 5, the terminals 154 and 152 of the coil 150 are respectively connected to a signal line 188 and to a ground connection. The signal line 188 is connected to one terminal of the switch 185, and then is connected to either the drive signal on line 184 generated by the drive signal generator 162, or a signal line 182, under the control of the control signal SWITCH on line 186. Thus when the coil 150 is in a drive phase, the drive signal is provided by the drive signal generator 162 to the coil 150. When the coil 150 is in a sense phase, any sense signal is delivered from the coil 150 on signal line 182.

With reference to Figure 6, in Figure 6a and 6b there is illustrated the drive and sense phases of the coil 150, which may also be considered to be transmit and receive phases. As can be seen in Figure 6b, a control signal corresponding to the signal SWITCH on line 186 switches between a high and a low state. A high state represents an excite, drive or transmit mode, and a low state represents a sense or receive mode. Thus between times to and t1, t2 and t3, and t4 and t5 an excite or transmit state is active; and between times t1 and t2, t3 and t4 and after time t5 a sense or receive state is active. As can be seen from Figure 6a, in a transmit state an excitation signal is provided on line 188 to excite the coil 150. Preferably the excitation signal is continuously generated on line 184.

The state of the switch 206 associated with the tuned circuit of the pointing device is illustrated by Figure 6c. As can be seen during the excitation period between time positions t0 and t1 the switch is off or open (as denoted by a low state), and a response will be expected to be detected in the sense period between time positions t1 and t2. As can also be seen at a time tₐ during the excitation period between time periods t2 and t3 the switch is turned on. This results in no signal being detected in the sensing period t3 to t4. At a time t_{b} after the time t4 the switch is again turned off, such that in subsequent sensing periods the presence of the pen may be detected.

In a receive mode any signal detected by the coil 150 is provided on line 182, which provides an input to the amplifier 164. Thus in the sense or receive period, a determination is made as to whether the presence of the pointing device 126 is detected or not. Figure 6d represents the signal on line 182, being the signal received in a sense phase.

In an example implementation, a 125KHz signal is provided as the drive signal, and the drive period is maintained for 100 cycles (80uS). This of course is implementation-dependent, and one skilled in the art will appreciate that alternative implementations will be used according to system requirements. For example, using a 916 MHz back-scatter system for driving the excitation signal may increase the range of operation over which the pointing device can be detected. Thus an excitation technique - and an excitation frequency - may be chosen in accordance with a desired range over which the pointing device is to be excited and sensed. An increase in the range allows an increase in the surface area of the interactive surface.

The excitation signal, and the excitation period, may also be dependent upon the Q characteristics of the tuned circuit of the pointing device, and the response time desired at the receiver. The described example illustrated with reference to Figure 6 assumes a simple halfwave rectification solution.

If during the period of excitation the pointing device with tuned circuit is present, and only light pressure is applied such that the pressure switch is open and the tuned circuit active, the energy from the coil 150 will inductively couple with the inductor 222 of the pointing device. The inductor 222 and the capacitor 226 of the tuned circuit will then resonant at substantially the same frequency as the drive signal (preferably 125KHz).

After the excitation period, in the sense or receive period, the tuned circuit of the pointing device will radiate stored energy, which inductively couples to the coil 150 to provide a signal on line 182 as illustrated in Figure 6d between time positions t1 and t2. This signal is provided as the input to the amplifier 164.

It should be noted that although there is described herein a drive and sense operation using a single loop, in alternative arrangements two loop coils (preferably each with multiple turns) may be provided, one for driving and one for sensing, with the drive coil being permanently excited. This will avoid the need to provide the switch 185 to switch the loop 150 between a drive phase and a sense phase.

The signal detector on the loop 150 in sense mode, as illustrated in Figure 6d between time positions t1 and t2 when the tuned circuit is not short-circuited, may be detected in a number of ways. In Figure 5 there is shown a simple implementation in which the received signal is amplified by the amplifier 164, rectified by the diode 160, and then used to charge the capacitor 168 acting as a storage capacitor. This is a simple amplitude modulation (AM) detector. In alternative implementations more sensitive detectors could be used where there may be an expectation to receive a weaker returned signal, for example where the size of the interactive surface 156 is larger and the pointing device is required to be detected from a distance further away from the coil 150. One alternative implementation may use a synchronous detector where the signal as illustrated in Figure 6d between time positions t1 and t2 is integrated over a number of cycles.

The demodulated signal provided by the AM detector (formed of the diode 167 and capacitor 168) forms a signal on line 170, which is illustrated in Figure 6f. This demodulated signal is a varying DC voltage, and is applied, as a received voltage V_{RX}, to one input of the comparator 172.

As can be seen in Figure 5, the resistor 174 is connected between a voltage supply and the second input to the comparator 172 on line 178, and the resistor 176 is connected between a voltage supply and the second input to the amplifier 172 on line 178. A threshold voltage denoted V_{T} is therefore formed on the input line 178 forming the first input to the comparator 172. The threshold voltage level V_{T} is denoted by a dashed line in Figure 6f.

As will be understood by one skilled in the art, the comparator 172 operates to compare the received (or detected) voltage V_{Rx} on line 170 with the threshold voltage V_{T} on line 178. The output of the comparator 172 therefore is either high or low in dependence upon whether the received voltage V_{Rx} is above or below the threshold voltage V_{T}.

Figure 6g illustrates the output of the amplifier 172. As can be seen, at a time tₓ the receive voltage V_{Rx} increases to exceed the threshold voltage V_{T}, and thus the signal at the output of the amplifier 172 switches from a low state to a high state. At a subsequent time ty the receive voltage V_{Rx} falls below the threshold voltage V_{T} and the output 180 of the amplifier 172 switches back to a low state.

Thus when the received signal is above a predetermined threshold, the system can identify that the pen is present and the pen switch has not been activated, indicating a force of less than approximately 150g.

In this condition, the pen contact with the resistive membrane will act as if the pen is in a "pen-up" condition (i.e. a mouse-over or hover condition). In such a condition, preferably no annotation can be input by the pointing device. The device 122 continues to track the position of the pointing device, using the resistive membrane sensing inputs, thereby providing "mouse-over" functionality.

If, however, the pen switch has been activated, as a result of a force greater than approximately 200g being applied, the tuned circuit within the pen would be shorted therefore not allowing the circuit to store energy through inductive coupling with the coil 150 in an excitation period. As a result during the sense period, such as the period between time positions t3 and t4, no energy will be radiated back by the tuned circuit to the coil 150. The DC output from the demodulator provided by the diode 166 and capacitor 168 on line 170 will therefore be sufficiently low as to not exceed the threshold voltage V_{T}, and the output of the comparator 172 will remain in a low state. This is illustrated in Figure 6f, where it can be seen in the time period t3 to t4, being the subsequent sensing period, no response is received in the sensing period. As such the output of the amplifier 172 on line 180, as illustrated in Figure 6g, remains in a low state.

Thus in a sensing period between time t3 and t4 the presence of the pen is not detected by the electromagnetic circuitry.

Illustrated in Figure 6h is sampling periods during the sense periods. As can be seen during the first sensing period between times t1 and t2 a sampling signal S_{T1} will detect a high signal at the output of the amplifier 172 on line 180. A sampling signal S_{T2} during the next sensing period between times t3 and t4 will sample a low signal on the output line 180 of the amplifier 172.

During the second sampling period where the presence of the pen is not detected by the electromagnetic circuitry, as the pen is known to be present due to the detection of its presence by the resistive touch membrane, then a "pen-down" state is established.

Thus the input condition determined by sampling the output of the amplifier on line 180 is combined with a knowledge of the presence of the pen determined by the resistive touch membrane surface in order to determine one of two states of the input condition.

In a preferred arrangement, in the event that the interactive surface 126 does not detect the presence of a pointing device, then the circuitry illustrated in Figure 5 may in any event be disabled.

The invention may also be implemented with the conditions defined by the opening or closing of the pressure-sensitive switch being reversed, such that in the event that the switch is open and the tuned circuit operative, it is determined to be a pen-down condition, and in the event that the tuned circuit is short-circuited it is determined to be a pen-up condition. In this scenario, the system will only flag a "pen-down" state when the tuned circuit radiates energy during a receive period. In this case, the application software could be written to make certain objects, such as menu buttons, to be responsive to touch, using only the touch-sensitive membrane to indicate a pen-down condition, and to make other areas intended for writing to only be responsive in the presence of the pointing device, requiring both the touch-sensitive membrane to detect the pen and the response from the tuned circuit. In other words, detected contact at the touch surface but no response during a sense period would enable a touch mode of operation, and detected contact at the touch surface and a detected response during a sense period would enable a pen mode of operation.

However the advantage of making the pressure-sensitive switch short circuit the tuned circuit when increased pressure is applied, as opposed to being open circuit when increased pressure is applied, is that if the user wishes to annotate with their finger, they may still do this but with the loss of mouse-over functionality. In such event the system would identify the finger as a "shorted" switch condition of the pointing device, and set a "pen-down" state as soon as the finger makes contact with the resistive membrane surface. This will also apply in the event that the user brought a simple pointing device such as a stylus to the surface.

As noted above, the invention is not restricted to operation at 125KHz. This frequency is chosen as a convenient frequency which is also used for radio frequency identification (RFID) purposes and therefore permits this kind of use. Other frequencies could also be utilised.

With a more sensitive pressure detector switch in the pointing device, and/or a more sensitive demodulator in the detection circuitry, the invention could be enhanced to distinguish between different amplitude or phase characteristics of return signals to allow the detection of multiple switches. This may allow, for example, for the detection of signals emulating the clicking of additional buttons on a mouse.

In a simple example, a single bit defined by the state of one switch could be encoded by changing the phase characteristics of the signal generated by the resonant or tuned circuit in dependence on the state of the switch.

In addition to, or in place of, the tuned or resonant circuit, the pointing device may be provided with a radio frequency identification (RF ID) tag. The RF ID tag may be provided to respond to the excitation signal from the input device. The RF ID tag may thus provide additional information concerning the pointing device to the input device. This may allow, for example, a unique identity of the pointing device to be communicated to the input device. This may allow the input device to distinguish between multiple inputs provided by multiple pointing devices.

The system is inherently efficient in that the activation of the circuit to detect the pen switch state preferably only occurs when the resistive membrane has detected the contact of a pointing device.

The advantage that the device may still operate in a conventional fashion when a finger or standard stylus is brought to the interactive surface, is helpful in the event that a user loses the pointing devices with the tuned circuits. In such eventuality the device can still be used, but with the loss of mouse-over functionality. In many implementations this will allow a user to continue to get productive use from the device.

The invention is described herein in the context of this application to a computer system forming part of an interactive display system. It will be understood by one skilled in the art that the principles of the invention, and the embodiments described herein, are not limited to any specific interactive display system. Moreover, the invention is not limited to application in association with an interactive display system. The principles of the invention and its embodiments may be implemented in any device having an interactive surface, whether or not that interactive surface is coincident with a display.

The invention has been described by way of reference to particular examples and exemplary embodiments. One skilled in the art will appreciate that the invention is not limited to the details of the specific examples and exemplary embodiments set forth. Numerous other embodiments may be envisaged without departing from the scope of the invention, which is defined by the appended claims.

## Claims

1. An input system for controlling a display, comprising:
an input device including:
an interactive surface, for detecting a contact point thereon, the interactive surface being associated with the display such that a location on the interactive surface corresponds to a location on the display, wherein the interactive surface does not comprise an electromagnetic grid array for determining a location of the contact point;
excitation/sensing circuitry for generating an excitation signal, and for sensing a response to the excitation signal; and
a pointing device adapted to respond to the excitation signal; and
wherein an input condition of the input device is determined in dependence on whether the interactive surface detects a contact point and whether the sensing circuitry receives a response from the pointing device.

2. The input system of claim 1 wherein the pointing device is adapted to switch between a first state and a second state, wherein a first input condition is determined responsive to the pointing device being in the first state, and a second input condition is determined responsive to the pointing device being in the second state.

3. The input system of claim 2 wherein the pointing device includes a pressure sensitive switch, wherein the pointing device is switched between the first state and the second state by applying pressure to the pointing device at the interactive surface.

4. The input system of any one of claims 1 to 3 wherein the pointing device includes a resonant circuit for responding to the excitation signal, wherein responsive to the excitation signal the resonant circuit is excited, and responsive to excitation of the resonant circuit the excitation/sensing circuitry of the input device is excited.

5. An input device for controlling a display, comprising:
an interactive surface, for detecting a contact point thereon, wherein the interactive surface does not comprise an electromagnetic grid array for determining a location of the contact point;
an excitation/sensing circuit for generating an excitation signal and for sensing a response to the excitation signal; and
a mode select circuit for determining a mode of operation for the input device in dependence on an input condition determined by whether a contact point on the interactive surface is detected and whether a response to the excitation signal is sensed.

6. The input device of claim 5, wherein a first state of the input condition is determined in dependence on the interactive surface detecting a contact point and the excitation/sensing circuit receiving a response from a pointing device, the state of the input condition denoting a hover state.

7. The input system of claim 5 wherein a second state of the input condition is determined in dependence on the interactive surface detecting a contact point and the excitation/sensing circuits not receiving a response from a pointing device, the state of the input condition denoting a pen-down state.

8. The input device of any one of claims 5 to 7 in which the interactive surface includes a resistive membrane for detecting a contact point.

9. A pointing device for use with an input device for controlling a display, comprising:
an excitation circuit for generating a signal responsive to an excitation signal;
a control circuit for enabling or disabling the excitation circuit in a first state or a second state of the pointing device.

10. The pointing device of claim 9 wherein the pointing device includes a pressure sensitive switch, wherein the pointing device is switched between the first state and the second state by applying pressure to the pointing device at the interactive surface.

11. The pointing device of claim 10 wherein with a first pressure value the pointing device is in the first state and with a second pressure value the pointing device is in the second state.

12. The pointing device of claim 11 wherein with the switch in the first state the excitation circuit is on, and the pointing device is enabled to respond to the excitation signal, and with the switch in the second state the excitation signal is off, and the pointing device is not enabled to respond to the excitation signal.

13. The pointing device of any one of claims 9 to 12 in which the pointing device includes circuitry for conveying information in response to the excitation signal.

14. The pointing device of claim 13 wherein the circuitry is a switch associated with the pointing device or a radio frequency identification tag.

15. A method for controlling an input system for a display, comprising the steps of:
detecting, at an interactive surface not comprising an electromagnetic grid array for determining a location of the contact, a contact point thereon, the interactive surface being associated with the display such that a location on the interactive surface corresponds to a location on the display;
generating an excitation signal; and
determining a response to the excitation signal; providing circuitry for responding to the excitation signal in a pointing device; and
determining an input condition of the input device in dependence on whether the interactive surface detects a contact point and whether the sensing means receives a response from the pointing device.
